# EUROPÄISCHE PATENTSCHRIFT

(11) **EP 0 460 405 B1**
(45) Veröffentlichungstag und Bekanntmachung des Hinweises auf die Patenterteilung: **27.03.1996**
(21) Anmeldenummer: 91107205.6
(22) Anmeldetag: 03.05.1991
(51) Int. Cl.: H04Q 3/62, H04M 3/42, H04M 3/50, H04Q 3/545, H04Q 11/04, H04M 11/00

(54) **Verfahren zum automatischen Aufbauen von Verbindungen für Daten, Gespräche und Sprachansagen in Kommunikations-Vermittlungsanlagen**
Method for the automatic establishment of interconnections for data, speech and announcements in communication exchanges
Procédé pour l'établissement automatique de connexions pour signaux de données, signaux de parole et pour messages vocaux dans des centraux de communication

(30) Priorität: 08.06.1990 DE 4018383
(43) Veröffentlichungstag der Anmeldung: 11.12.1991
(73) Patentinhaber: TELENORMA GMBH, D-60326 Frankfurt am Main (DE)
(72) Erfinder: Hegenbart, Brigitte, W-6233 Kelkheim (DE); Konietzky, Heike, W-6000 Frankfurt/M. (DE); Wehrhahn, Klaus, Dipl.-Ing., W-6053 Obertshausen 2 (DE)

(56) Entgegenhaltungen:
- EP-A- 0 187 945
- EP-A- 0 460 403
- EP-A- 0 460 404
- DE-A- 3 416 826
- DE-A- 3 542 969
- US-A- 3 969 587

## Beschreibung

Die Erfindung betrifft ein Verfahren zum automatischen Aufbauen von Verbindungen für Daten, Gespräche und Sprachansagen in Kommunikations-Vermittlungsanlagen nach dem Oberbegriff des Patentanspruchs 1.

Aus der DE-OS 21 65 632 ist eine zeitmultiplexe Fernsprech-Vermittlungseinrichtung mit automatischem Weckdienst bekannt. Für den automatischen Weckdienst wird ein Digitalrechner benutzt, welcher mit der zentralen Steuereinrichtung der Vermittlungseinrichtung in direkter Verbindung steht. Dieser Digitalrechner enthält einen Speicher für die Abspeicherung der Nebenstellen-Nummern von Hotelgästen sowie der gewünschten Weckzeiten. Wenn eine gewünschte Weckzeit in den Digitalrechner eingegeben werden soll, so muß vom Fernsprechapparat des Hotelzimmers aus eine Verbindung zum Digitalrechner aufgebaut werden. Dabei wird zunächst über das Koppelnetz eine Verbindung zu einem Register hergestellt, wo die zu wählenden Ziffern einzeln empfangen werden und über die zentrale Steuereinrichtung zum Digitalrechner gelangen.Dort werden die gewählten Ziffern, welche eine gewünschte Weckzeit kennzeichnen, zusammen mit der Rufnummer des betreffenden Anschlusses abgelegt.

Der Digitalrechner vergleicht fortlaufend die für die einzelnen Nebenstellen abgespeicherten Zeiten mit der Realzeit. Wenn eine Übereinstimmung einer eingespeicherten Zeit mit der Realzeit vorgefunden wird, so wird ein Weckvorgang eingeleitet. Zu diesem Zweck wird vom Digitalrechner aus die zentrale Steuereinrichtung angereizt, so daß über das Koppelnetz eine Verbindung aufgebaut wird, wobei der betreffende Teilnehmeranschluß angerufen und anschließend mit einem Zeitansagegerät verbunden wird.

Bei einem derartigen Verfahren müssen in der zentralen Steuereinrichtung für den Betrieb des Digitalrechners besondere Prozeduren ablaufen und besondere Schnittstellen vorhanden sein. Bei der Dateneingabe sind Verbindungen über das Koppelnetz notwendig, um die Ziffern einzeln über die zentrale Steuereinrichtung zum Digitalrechner übertragen zu können. Hierbei wird jedesmal die zentrale Steuereinrichtung belegt, so daß eine starke Belastung auftreten kann, wenn viele Eingaben in den Digitalrechner erfolgen. Wenn der Digitalrechner auch für andere Aufgaben benutzt wird, so müssen entsprechende Programme erstellt werden, welche mit bereits vorhandenen Programmen abgestimmt werden müssen. Auch für die zentrale Steuereinrichtung sind besondere Programme für den Rechnerbetrieb notwendig, welche ebenfalls auf bereits vorhandene Vermittlungsprogramme angepaßt werden müssen. Wenn die zentrale Steuereinrichtung, wie dies in der vorgenannten DE-OS angegeben ist, mit einer festverdrahteten Programmierung ausgestattet ist, so sind erhebliche Vorleistungen notwendig, um einen Rechnerbetrieb zu ermöglichen.

Ein Verfahren und eine Anordnung zum Steuern der Vermittlungsvorgänge in einer Fernmelde-, insbesondere Fernsprechanlage ist aus der DE-PS 31 07 795 bekannt. Dabei handelt es sich um eine Fernsprechanlage mit zentraler Steuerung, welche mit dezentralen Gruppensteuereinrichtungen zusammen arbeitet. Für jeweils eine Gruppe von Anschlußorganen ist eine sogenannte Informationsverarbeitungseinrichtung IVG vorgesehen, welche über periphere Informationsverarbeitungseinrichtungen IVP mit den zu der betreffenden Gruppe gehörenden Anschlußorganen zusammenarbeitet. Alle Gruppensteuerwerke, also die Informationsverarbeitungseinrichtungen der Gruppen, sind untereinander und mit der zentralen Informationsverarbeitungseinheit IVZ über einen Datenbus verbunden.

Da es bei dieser Patentschrift lediglich darauf ankommt, ein Verfahren zum Steuern der Vermittlungsvorgänge in einer Fernsprechanlage mit kleinerem Ausbau vorzustellen, welches mit nur einer Steuerung auskommt, werden in dieser Schrift Sondermerkmale nicht behandelt. Es ist also nicht angegeben, auf welche Weise ein automatischer Verbindungsaufbau erfolgen könnte, der nicht von einem Anschlußorgan aus manuell eingeleitet wird.

Die Aufgabe der Erfindung besteht darin, ein Verfahren anzugeben, womit eine Vielzahl von für Kommunikations-Vermittlungsanlagen nützlichen Zusatzmerkmalen verwirklicht werden kann, ohne daß Vorleistungen in der Standardausstattung notwendig sind, wobei außerdem bereits vorhandene Strukturen so mitbenutzt werden, daß bestehende Verfahren nicht wesentlich geändert werden müssen. Die für Signalisierung vorhandenen Wege zwischen den Steuereinrichtungen sollen so in das Verfahren einbezogen werden, daß das Schalten von Koppelwegen nur dann notwendig ist, wenn eine Sprachübertragung stattfinden muß.

Für die Lösung dieser Aufgabe ist eine Merkmalskombination vorgesehen, wie sie im Patentanspruch 1 angegeben ist.

Durch das Einfügen einer Verarbeitungseinrichtung wird in vorteilhafter Weise erreicht, daß beim Einrichten eines neuen Merkmals in der Verarbeitungseinrichtung keine Rücksicht auf bereits in einer Kommunikations-Vermittlungsanlage bestehende Strukturen und Programme genommen werden muß. Die zentrale Steuereinrichtung wird weniger belastet, weil die Verarbeitungseinrichtung und die dezentralen Steuereinrichtungen direkt miteinander Informationen austauschen können. Das für den Aufbau von Verbindungen vorhandene Koppelnetz wird weniger beansprucht, weil es z. B. für Dateneingaben nicht notwendig ist, darüber Verbindungen aufzubauen.

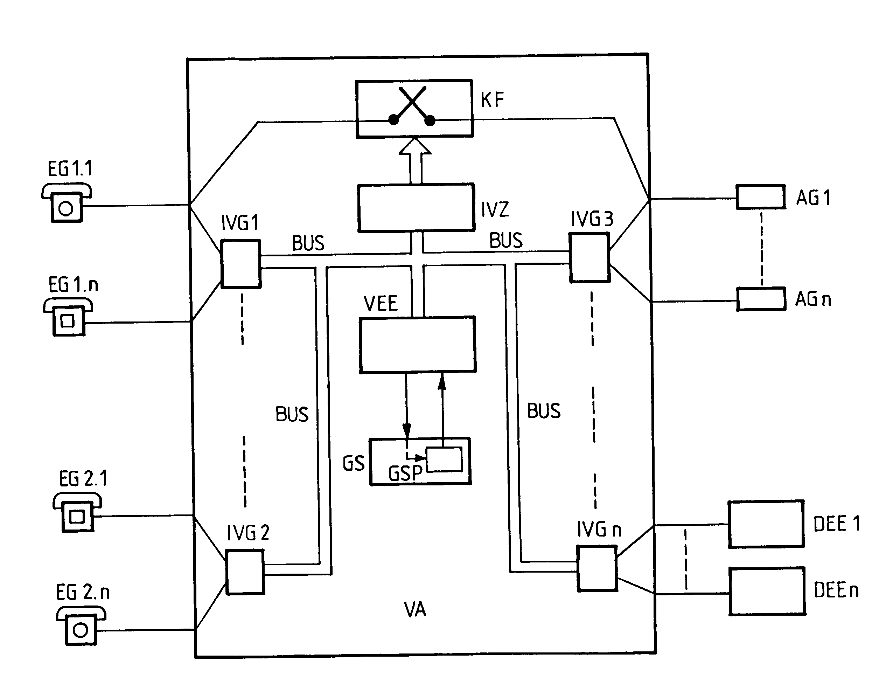

Ein Ausführungsbeispiel der Erfindung wird nachfolgend anhand einer Zeichnung näher beschrieben. In der Zeichnung ist schematisch eine Vermittlungsanlage VA dargestellt, welche mehrere dezentrale Gruppensteuerungen IVG1 bis IVGn enthält. Es sei angenommen, daß die dezentralen Gruppensteuerungen IVG1 und IVG2 für jeweils eine Gruppe von Teilnehmer-Endgeräten EG1.1 bis EG1.n bzw. EG2.1 bis EG2.n zuständig sind. Für eine Gruppe von Ansagegeräten AG1 bis AGn ist die dezentrale Gruppensteuerung IVG3 zuständig. Eine Anzahl von Datenendeinrichtungen DEE1 bis DEEn werden von einer weiteren dezentralen Gruppensteuerung IVGn gesteuert.

Alle dezentralen Gruppensteuerungen IVG1 bis IVGn sind untereinander über ein Busleitungssystem BUS verbunden, woran auch eine zentrale Steuerung IVZ angeschlossen ist. Mit Hilfe der zentralen Steuerung IVZ und in Zusammenarbeit mit den dezentralen Gruppensteuerungen IVG1 bis IVGn können Verbindungen in einem Koppelfeld KF hergestellt werden. Dieses Koppelfeld KF kann im Raumvielfach ausgebaut sein und direkte Durchschaltungen ermöglichen oder als Zeitvielfach-Koppelfeld ausgebildet sein. Es ist in der Lage, Verbindungen zu allen Anschlußorganen herzustellen, sofern diese zulässig und sinnvoll sind.

Zusätzlich zu den bereits erwähnten Teilen der Vermittlungsanlage VA ist an das Busleitungssystem BUS eine Verarbeitungseinrichtung VEE angeschlossen. Mit dieser Verarbeitungseinrichtung ist es möglich, zusätzliche Merkmale zu realisieren, welche über die rein vermittlungstechnischen Funktionen hinausgehen. Die Verarbeitungseinrichtung VEE ist wie eine dezentrale Gruppensteuerung an das Busleitungssystem BUS angeschlossen und kann Informationen mit allen dezentralen Gruppensteuerungen IVG und der zentralen Steuerung IVZ austauschen. Außerdem kann die Verarbeitungseinrichtung VEE sich so wie ein Anschlußorgan verhalten, wenn besondere Verbindungen aufgebaut werden, wie dies im einzelnen noch beschrieben wird. Die Verarbeitungseinrichtung VEE hat außerdem Zugriff auf eine Gerätesteuerung GS, womit beispielsweise Ansagegeräte AG verwaltet werden können. Zu diesem Zweck gibt es in der Gerätesteuerung GS einen Gerätespeicher GSP, worin die Eigenschaften und Verbindungszustände der einzelnen Geräte, beispielsweise Ansagegeräte AG abgelegt sind.

Um die Funktionsweise der einzelnen Teile der Vermittlungsanlage beim Verfahren zum automatischen Aufbauen von Verbindungen näher zu erläutern, wird nachfolgend ein Anwendungsbeispiel beschrieben.

Es sei angenommen, daß von einem Endgerät, z. B. EG1.1 aus über die Vermittlungsanlage VA Daten eingegeben werden sollen, um zu bewirken, daß zu einer vorbestimmten Zeit ein Anruf erfolgen soll, wobei es sich beispielsweise um das Wecken eines Hotelgastes handeln kann. Beim Belegen des Anschlusses wird mit dem Abnehmen des Handapparates in üblicher Weise der Wählton hörbar, so daß nun Ziffern gewählt werden können. Durch Wahl einer besonderen Kennzahl wird erreicht, daß die Vorbereitungen getroffen werden, um eine für das betreffende Merkmal zuständige Datenendeinrichtung, z. B. DEE1 anzusteuern. In der zuständigen dezentralen Gruppensteuerung IVG1 wird an dem ersten gewählten Zeichen erkannt, daß eine Verbindung für Dateneingabe aufzubauen ist. Deshalb wird von der dezentralen Gruppensteuerung IVG1 die Verarbeitungseinrichtung VEE angesteuert und die gewählten Zeichen dorthin übertragen. Dies geschieht über das Busleitungssystem BUS, ohne daß eine Verbindung über das Koppelfeld KF aufgebaut wird. Bei der Übergabe der gewählten Zeichen von der dezentralen Gruppensteuerung IVG1 in die Verarbeitungseinrichtung VEE wird auch die Adresse oder Rufnummer des Anschlußorgans übergeben, woran das betreffende Endgerät EG1.1 angeschlossen ist. Zusätzlich können besondere Anschlußkennzeichnungen und Berechtigungen mit übertragen werden. Damit ist in der Verarbeitungseinrichtung VEE bekannt, von welchem Anschluß aus eine Verbindung ausgeht und welche Eigenschaften dieser Anschluß hat. Außerdem stellt sich die Verarbeitungseinrichtung VEE auf das durch die gewählten Zeichen gekennzeichnete Merkmal ein.

Wenn auf diese Weise die Verarbeitungseinrichtung VEE eingestellt worden ist, müssen weitere Ziffern eingegeben werden, um den Zeitpunkt zu kennzeichnen, zu dem ein Anruf erfolgen soll, beispielsweise um einen Weckauftrag zu erfüllen. Die nachfolgend zu diesem Zweck vom Teilnehmerendgerät EG1.1 aus gewählten Ziffern werden einzeln über den bereits beschriebenen Weg, also über das Busleitungssystem BUS, zur Verarbeitungseinrichtung VEE hin übertragen. Damit bei einem Multiplexbetrieb eine Zuordnung möglich ist, wird jeweils bei Übergabe einer Ziffer auch die der betreffenden Verbindung zugeordnete Kennzeichnung übergeben. Die Verarbeitungseinrichtung VEE stellt nun anhand der in ihr vorhandenen Verknüpfungen und/oder Programme fest, wieviele Ziffern gewählt worden sind, und ob genügend Ziffern eingewählt worden sind, um im beschriebenen Fall eine Uhrzeit eindeutig zu kennzeichnen. Wenn die Verarbeitungseinrichtung VEE feststellt, daß die Informationsmenge für eine eindeutige Aussage ausreichend ist, wird ein Datensatz zusammengestellt, der so beschaffen ist, daß er von einer Datenendeinrichtung, z. B. DEE1, direkt verarbeitet werden kann. Dieser Datensatz wird an die betreffende Datenendeinrichtung DEE1 adressiert und über das Busleitungssystem BUS dorthin gesendet. In diesem Datensatz enthalten ist auch die Adresse oder Rufnummer des Anschlusses, von dem aus die Verbindung aufgebaut wurde. Die von der Verarbeitungseinrichtung VEE an die Datenendeinrichtung DEE1 übergebenen Informationen werden in einem Speicher abgelegt, damit automatisch eine Verbindung aufgebaut werden kann, wenn die aktuelle Zeit mit dem eingespeicherten Zeitwert übereinstimmt.

Wenn in der nun selbständig und unabhängig arbeitenden Datenendeinrichtung DEE1 festgestellt wird, daß eine Übereinstimmung der aktuellen Zeit mit einem der eingespeicherten Werte vorliegt, so wird automatisch die zuständige dezentrale Gruppensteuerung IVGn angereizt, in genau derselben Weise, wie dies von einem Teilnehmerendgerät aus geschehen könnte. Da es sich jetzt aber um eine Datenendeinrichtung DEE1 handelt, werden die zu dem betreffenden Zeitpunkt eingespeicherten Informationen, nämlich die Adresse oder Rufnummer des Anschlusses, im Beispiel des Teilnehmerendgerätes EG1.1, sowie das zugehörige Merkmal, im Beispiel Weckauftrag, zur Verarbeitungseinrichtung VEE hin über das Busleitungssystem BUS übertragen. Die Verarbeitungseinrichtung VEE wird damit beauftragt zu veranlassen, daß das betreffende Anschlußorgan und damit das Teilnehmer-Endgerät EG1.1 angerufen wird. Daraufhin stellt die Verarbeitungseinrichtung VEE eine Meldung zusammen, worin die Adresse des Anschlusses und ein Verbindungskennzeichen enthalten ist, und sendet diese an die zuständige dezentrale Gruppensteuerung IVG1. Diese dabei zusammengestellte Meldung enthält genügend Informationen, so daß die dezentrale Gruppensteuerung IVG1 in der Lage ist zu veranlassen, daß der gewünschte Anschluß angesteuert wird, um dort eine Rufstromanschaltung zu bewirken.

Wenn sich daraufhin der Teilnehmer am Endgerät EG1.1 meldet, so wird diese Meldung zunächst in der dezentralen Gruppensteuerung IVG1 empfangen. Da dort bekannt ist, daß diese Verbindung von der Verarbeitungseinrichtung VEE aus eingeleitet wurde, wird das Kriterium "Teilnehmermeldung" von der dezentralen Gruppensteuerung IVG1 über das Busleitungssystem BUS zur Verarbeitungseinrichtung VEE übertragen. Die Verarbeitungseinrichtung VEE veranlaßt daraufhin, daß eine Ansage an den betreffenden Anschluß angeschaltet wird. Dies geschieht im einfachsten Fall dadurch, daß ein entsprechender Datensatz an die dezentrale Gruppensteuerung IVG1 gesendet wird, um den betreffenden Anschluß auf direktem Wege mit einer Zeitlage oder einer Koppelspalte zu verbinden, auf der permanent ein Ansagetext wiedergegeben wird. Diese Verbindung bleibt dann solange bestehen, bis vom Teilnehmer aus die Verbindung ausgelöst wird. Dieses Kriterium wird von der dezentralen Gruppensteuerung IVG1 aufgenommen und über das Busleitungssystem BUS zur Verarbeitungseinrichtung VEE gesendet. Daraufhin wird in der Verarbeitungseinrichtung VEE ein Datensatz zusammengestellt, welcher über das Busleitungssystem BUS zu der dezentralen Steuerung IVGn gesendet wird, die für die betreffende Datenendeinrichtung DEE1 zuständig ist. In diesem Datensatz ist ein Quittungssignal enthalten, so daß in der Datenendeinrichtung DEE1 der mit dieser Verbindung in Zusammenhang stehende Eintrag im Speicher gelöscht werden kann und somit erledigt ist.

Wenn die Verarbeitungseinrichtung VEE erkennt, daß bei einem Merkmal, z. B. bei einer Dateneingabe, Bedienungshinweise zu einem Endgerät, z. B. EG1.1 übertragen werden sollten, so kann von der Verarbeitungseinrichtung VEE aus eine Verbindung zwischen dem besagten Endgerät EG1.1 und einem der Ansagegeräte, z. B. AG1 über das Koppelfeld KF hergestellt werden. Dabei wird die Kennzeichnung des Teilnehmeranschlusses, das von dem Teilnehmer gewünschte Merkmal und der jeweilige Verbindungszustand berücksichtigt. Bei dem zuvor beschriebenen Beispiel einer Termineingabe kann der Teilnehmer dazu aufgefordert werden, daß er die Uhrzeit mit 4 Ziffern eingeben soll. Wenn die Verarbeitungseinrichtung VEE an der ersten Ziffer erkennt, daß es sich um eine Termineingabe handelt, so wird, um eine entsprechende Ansage durchgeben zu können, zunächst die mit der Verarbeitungseinrichtung VEE in Verbindung stehende Gerätesteuerung GS angereizt. Dort befindet sich ein Gerätespeicher GSP, wo die Eigenschaften und Verbindungszustände aller zur Verfügung stehenden Ansagegeräte AG1 bis AGn abgelegt sind. Dem Merkmal und dem jeweiligen Verbindungszustand entsprechend wird mit Hilfe des Gerätespeichers GSP ein Ansagegerät, z. B. AG1 ermittelt, welches die gewünschten Texte zur Verfügung stellen kann und nicht anderweitig belegt ist. Der Gerätespeicher liefert hierzu die Anschlußadresse, welche von der Verarbeitungseinrichtung VEE aus über das Busleitungssystem BUS zu der zuständigen dezentralen Steuerung IVG3 gesendet wird.
Anschließend wird der Auftrag erteilt, eine Verbindung über das Koppelfeld KF zu dem betreffenden Teilnehmeranschluß herzustellen, an dem das Endgerät EG1.1 angeschlossen ist. Von der Verarbeitungseinrichtung VEE aus geht außerdem an die für das betreffende Anschlußorgan zuständige Gruppensteuerung IVG1 eine entsprechende Meldung ab, damit auch von dort aus das Herstellen einer Verbindung vorbereitet werden kann. Unter Mithilfe der zentralen Steuerung IVZ und unter Beteiligung der beiden dezentralen Gruppensteuerungen IVG1 und IVG3 wird über das Koppelfeld KF ein Verbindungsweg durchgeschaltet, so daß das Teilnehmer-Endgerät EG1.1 direkt mit dem Ansagegerät AG1 verbunden ist. Das Ansagegerät AG1 erhält von der Verarbeitungseinrichtung VEE Steuerbefehle, so daß eine Textauswahl in Abhängigkeit vom jeweiligen Verbindungszustand und vom Teilnehmerverhalten stattfinden kann. Bei dieser Textauswahl kann auch anhand des Teilnehmerkennzeichens bestimmt werden, in welcher Sprache die Ansage zu erfolgen hat. Es ist außerdem möglich, die Verbindung auf ein anderes Ansagegerät, z. B. AGn umzuschalten, wenn Texte benötigt werden, welche beim vorherigen Ansagegerät AG1 nicht zur Verfügung stehen.

Bei einer auf diese Weise realisierten Bedienerführung bestehen vom Teilnehmer-Endgerät EG1.1 aus während dieses Verbindungszustandes zwei Verbindungen, nämlich die Verbindung zwischen einem Ansagegerät, z. B. AG1 und dem Teilnehmer-Endgerät EG1.1 über das Koppelfeld KF und die für eine Dateneingabe bestehende Verbindung über die dezentrale Gruppensteuerung IVG1 und das Busleitungssystem zur Verarbeitungseinrichtung VEE. Weiterhin besteht eine Verbindung zwischen der Verarbeitungseinrichtung VEE ebenfalls über das Busleitungssystem BUS zu der dezentralen Steuerung IVGn, welche für Datenendeinrichtungen DEE1 bis DEEn zuständig ist. Über diesen Weg gelangen die von einem Teilnehmer-Endgerät EG1.1 aus eingegebenen Daten zunächst zur Verarbeitungseinrichtung VEE, wo sie umgesetzt und über die zweite Teilstrecke dieser Verbindung zur Datenendeinrichtung, z. B. DEE1 weitergegeben werden.

Mit diesem Konzept ist es möglich, verschiedenartige Teilnehmer-Endgeräte EG1.1 bis EG2.n zu bedienen, unabhängig davon, welche Eingabemittel benutzt werden. So können also Fernsprechapparate mit Nummernschalter, womit lediglich Ziffern eingebbar sind, ebenso zur Dateneingabe benutzt werden, wie Fernsprechapparate mit Wähltastatur und Zusatztasten oder komfortable Endgeräte mit alphanumerischer Tastatur. Die Eingabedaten gelangen jeweils über das Busleitungssystem zur Verarbeitungseinrichtung VEE, wobei auch Signalisierungskanäle benutzt werden können, und werden dort empfangen. Mit Hilfe der Teilnehmerkennung und durch die Kenntnis der Eigenschaften der jeweils für ein Merkmal benötigten Datenendeinrichtung DEE1 bis DEEn lassen sich die in der Verarbeitungseinrichtung VEE empfangenen Daten so zusammenstellen und umsetzen, daß sie von der betreffenden Datenendeinrichtung DEE1 unmittelbar verarbeitet werden können.

Neben dem beschriebenen Merkmal Terminanruf, bzw. Weckauftrag lassen sich eine Vielzahl anderer Merkmale verwirklichen, von denen hier nur einige wenige angedeutet werden können. So ist es beispielsweise möglich, zu einem bestimmten Zeitpunkt zwei Teilnehmer-Endgeräte EG1.n und EG2.n miteinander zu verbinden. Anstelle von zwei Teilnehmer-Endgeräten, beispielsweise Fernsprechapparate, können auch Datenendeinrichtungen DEE miteinander verbunden werden, wenn ein Datentransfer gewünscht wird. Außerdem ist es möglich, mehrere Fernsprech-Endgeräte zu einer Konferenz zusammenzuschalten. Dabei können während des Aufbaues der Konferenz, d. h. wenn noch nicht alle Teilnehmer sich gemeldet haben, zusätzlich Ansagetexte eingespielt werden. Außerdem ist es möglich, Externverbindungen zeitabhängig oder ereignisabhängig aufzubauen, wobei die jeweils zu wählende Rufnummer in dem entsprechenden Datensatz gespeichert sein muß. Mit einer Vermittlungsanlage VA, welche auf die vorbeschriebene Weise ausgestattet ist, lassen sich für viele Geschäftsbranchen optimale Konzepte verwirklichen.

## Patentansprüche

1. Verfahren zum automatischen Aufbauen von Verbindungen für Daten, Gespräche und Sprachansagen in einer Kommunikations-Vermittlungsanlage mit dezentralen Gruppensteuerungen (IVG) und zentralen Steuerungen (IVZ), wobei zu vorbestimmten Zeitpunkten Verbindungen selbständig entstehen und/oder Nutzinformationen an ein Endgerät (EG) abgegeben werden und Datenendeinrichtungen (DEE) für die Realisierung zusätzlicher Merkmale vorgesehen sind,
dadurch gekennzeichnet,
daß eine Verarbeitungseinrichtung (VEE) vorgesehen ist, die über ein Busleitungssystem (BUS) mit den dezentralen Gruppensteuerungen (IVG) und der zentralen Steuerung (IVZ) verbunden ist und mit diesen Informationen austauschen kann,
daß die dezentralen Gruppensteuerungen (IVG) jeweils für Gruppen von Endgeräten (EG) und Datenendeinrichtungen (DEE) zuständig sind,
daß die Verarbeitungseinrichtung (VEE) von einer Datenendeinrichtung (DEE) aus mit dem Herstellen einer Verbindung zu einem Endgerät (EG) beauftragt wird, wenn entweder ein vorbestimmter Zeitpunkt eingetreten ist, der aufgrund der Eingabe von Daten durch ein Endgerät (EG) über die Kommunikations-Vermittlungsanlage in die Datenendeinrichtung (DEE) bestimmt wird, oder von sich aus bei Merkmalen, die über die rein vermittlungstechnischen Funktionen hinausgehen, erkennt, daß eine Verbindung für Daten und/oder Sprache aufzubauen ist,
und daß für einen automatischen Verbindungsaufbau die von der Datenendeinrichtung (DEE) zur Verfügung gestellten Adressen und/oder Rufnummern von miteinander zu verbindenden Anschlußorganen von der Verarbeitungseinrichtung (VEE) über das Busleitungssystem (BUS) an die jeweils zuständigen dezentralen Steuereinrichtungen (IVG) gesendet und Zusatzinformationen hinzugefügt werden, damit von dort aus eine Verbindung mit den gleichen Prozeduren aufgebaut wird, wie sie bei einer von einem Anschlußorgan ausgehenden Verbindung ablaufen.

2. Verfahren nach Anspruch 1,
dadurch gekennzeichnet,
daß bei einem automatischen Verbindungsaufbau von der Verarbeitungseinrichtung (VEE) aus das Zustandekommen einer Verbindung überwacht wird, und daß dann eine Quittungsmeldung an die Datenendeinrichtung (DEE) übertragen wird, wenn die Verbindung erledigt ist.

3. Verfahren nach Anspruch 1,
dadurch gekennzeichnet,
daß eine Gerätesteuerung (GS) vorgesehen ist, welche einen Gerätespeicher (GSP) enthält, worin die Eigenschaften und der Verbindungszustand von Ansagegeräten (AG) abgelegt sind,
und daß die Verarbeitungseinrichtung (VEE) mit der Gerätesteuerung (GS) in Verbindung tritt, um die Adresse eines verfügbaren Ansagegerätes (AG) zu ermitteln.

4. Verfahren nach Anspruch 1,
dadurch gekennzeichnet,
daß die Verarbeitungseinrichtung (VEE) die Anschaltung eines Ansagegerätes (AG) an eine zur Dateneingabe aufgebaute Verbindung über ein Koppelfeld (KF) von sich aus veranlaßt, wenn sich aufgrund eines bestimmten Merkmales und/oder anhand der Teilnehmerkennung ergibt, daß Ansagen zur Bedienerführung erforderlich sind.

5. Verfahren nach Anspruch 1,
dadurch gekennzeichnet,
daß von der Verarbeitungseinrichtung (VEE) Informationen über das Busleitungssystem (BUS) und die für Ansagegeräte zuständige Gruppensteuerung (IVG) an das zu benutzende Ansagegerät (AG) gesendet werden, um die Durchschaltung einer Sprachverbindung über ein Koppelfeld (KF) zu bewirken, und um die Art des auszugebenden Textes und/oder die Sprache zu bestimmen.

6. Verfahren nach Anspruch 1,
dadurch gekennzeichnet,
daß die Auslösung einer Verbindung mit einem Ansagegerät (AG) von der Verarbeitungseinrichtung (VEE) veranlaßt wird, indem entsprechende Informationen über das Busleitungssystem (BUS) zu den an der Verbindung beteiligten Gruppensteuerungen (IVG) gesendet werden.

## Claims

1. Method for automatically setting up connections for data, speech and announcements in a communication exchange with decentralized group controls (IVG) and centralized controls (IVZ), connections being made automatically and/or traffic information being output to a terminal (EG) at predetermined times and data terminal devices (DEE) for implementing additional features being provided, characterized in that a processing device (VEE) is provided which is connected via a bus line system (BUS) to the decentralized group controls (IVG) and the centralized control (IVZ) and can exchange information therewith, in that the decentralized group controls (IVG) are each responsible for groups of terminals (EG) and data terminal devices (DEE), in that the processing device (VEE) is given an order from a data terminal device (DEE) to establish a connection to a terminal (EG) if either a predetermined time has arrived, which time is determined on the basis of the inputting of data into the data terminal device (DEE) by a terminal (EG) via the communication exchange, or if it detects itself, in the case of features which exceed the purely switching functions, that a connection is to be set up for data and/or speech, and in that, for an automatic connection setup, the addresses made available by the data terminal device (DEE) and/or call numbers of connection elements which are to be connected to one another are transmitted by the processing device (VEE) to the respectively responsible decentralized control devices (IVG) via the bus line system (BUS) and additional information is added so that a connection is set up from there using the same procedures as those which occur in the case of a connection starting from a connection element.

2. Method according to Claim 1, characterized in that in the case of an automatic connection setup the production of a connection is monitored from the processing device (VEE), and in that an acknowledgement report is transmitted to the data terminal device (DEE) when the connection is completed.

3. Method according to Claim 1, characterized in that a device control (GS) is provided which contains a device memory (GSP) in which the properties and the connection state of announcement devices (AG) are stored, and in that the processing device (VEE) becomes connected to the device control (GS) in order to identify the address of an available announcement device (AG).

4. Method according to Claim 1, characterized in that the processing device (VEE) itself brings about the coupling of an announcement device (AG), via a switching matrix (KF), to a connection which is set up for inputting data when it becomes clear, as a result of a specific feature and/or by reference to the subscriber identification, that announcements are necessary for user guidance.

5. Method according to Claim 1, characterized in that information relating to the bus line system (BUS) and the group control (IVG) responsible for announcement devices is transmitted from the processing device (VEE) to the announcement device (AG) to be used in order to bring about the switching through of a speech connection via a switching matrix (KF) and in order to determine the type of text to be output and/or the speech.

6. Method according to Claim 1, characterized in that the triggering of a connection to an announcement device (AG) is brought about by the processing device (VEE) in that corresponding information relating to the bus line system (BUS) is transmitted to the group controls (IVG) involved in the connection.

## Revendications

1. Procédé d'établissement automatique de connexion pour des signaux de données, des signaux de parole et des messages vocaux dans un central de communication avec des commandes décentralisés de groupes (IVG) et des commandes centrales (IVZ), des connexions s'établissant automatiquement à des instants prédéterminés et/ou des informations utiles étant fournies à un terminal (EG) ainsi que des terminaux de données (DEE) pour réaliser les caractéristiques supplémentaires,
caractérisé en ce que,
il est prévu une installation de traitement (VEE) reliée par un système de (BUS) aux commandes décentralisés de groupes (IVG) et à la commande centrale (IVZ) en échangeant des informations avec ceux-ci,
- les commandes décentralisés de groupes (IVG) sont chaque fois responsables pour des groupes de terminaux (EG) et des terminaux de données (DEE),
- l'installation de traitement (VEE) est mandatée par un terminal de données (DEE) pour établir une connexion avec un terminal (EG) à un instant donné défini par l'introduction des données par un terminal (EG) par l'intermédiaire du central de communication dans le terminal de données (DEE) ou si à partir de caractéristiques qui dépassent les simples fonctions de transmission, il faut établir une connexion pour des signaux de données et/ou des signaux de parole, et,
- pour l'établissement automatique d'une connexion, les adresses fournies par le terminal de données (DEE) et/ou le numéro d'appel d'organes de branchement à relier sont émises par l'installation de traitement (VEE) par le système de (BUS) aux installations de commande décentralisée (IVG) responsables, avec adjonction d'informations supplémentaires pour y établir une liaison selon les mêmes procédures que celles qui s'effectuent à partir d'un organe de branchement.

2. Procédé selon la revendication 1, caractérisé en ce que lors de l'établissement automatique d'une connexion, une installation de traitement (VEE) surveille l'établissement de la connexion et un signal d'accusé de réception est transmis au terminal de données (DEE) lorsque la liaison est établie.

3. Procédé selon la revendication 1, caractérisé par une commande d'appareil (GS) contenant une mémoire d'appareil (GSP) dans laquelle sont enregistrés les propriétés et l'état de connexion des émetteurs de message (AG), et l'installation de traitement (VEE) est mise en communication avec la commande d'appareil (GS) pour déterminer l'adresse d'un émetteur de message (AG) disponible.

4. Procédé selon la revendication 1, caractérisé en ce que l'installation de traitement (VEE) réalise le branchement d'un émetteur de message (AG) sur une connexion pour une entrée de données par l'intermédiaire d'un champ de couplage (KF), automatiquement, si sur la base d'une caractéristique définie et/ou à l'aide d'une caractéristique d'abonné, il résulte qu'il faut des indications pour la conduite de service.

5. Procédé selon la revendication 1, caractérisé en ce que l'installation de traitement (VEE) transmet des informations par le système de (BUS) et les commandes de groupes responsables (IVG) pour les émetteurs de message vers l'émetteur de message (AG) utilisé pour établir une liaison pour messages vocaux, et pour définir la nature du texte à émettre et/ou la langue.

6. Procédé selon la revendication 1, caractérisé en ce que le déclenchement d'une connexion avec un émetteur de message (AG) est assuré par une installation de traitement (VEE) en ce qu'elle émet des informations concernées par le système de (BUS) vers les commandes de groupes participant à la connexion (IVG).
